# EUROPÄISCHE PATENTSCHRIFT

(11) **EP 1 120 588 B1**
(45) Veröffentlichungstag und Bekanntmachung des Hinweises auf die Patenterteilung: **03.08.2005**
(21) Anmeldenummer: 00125337.6
(22) Anmeldetag: 30.11.2000
(51) Int. Cl.: F16H 61/02, F16H 61/00, G07C 5/00

(54) **Verfahren zur Verbesserung der Auslegung von Antriebssträngen für Fahrzeuge**
Process to improve the design of vehicle drive lines
Procédé pour améliorer le dimensionnement de trains de propulsion véhiculaires

(30) Priorität: 24.01.2000 DE 10002676
(43) Veröffentlichungstag der Anmeldung: 01.08.2001
(73) Patentinhaber: Voith Turbo GmbH & Co. KG, 89522 Heidenheim (DE)
(72) Erfinder: Müller, Robert, Dr., 89407 Dillingen (DE); Hendrickx, Hub, 7391 MT Twello (NL); Nijhof, Tonnie, 7321 LE Apeldoorn (NL)
(74) Vertreter: Dr. Weitzel & Partner

(56) Entgegenhaltungen:
- US-A- 5 410 477
- US-A- 5 483 446
- US-A- 5 754 964
- PATENT ABSTRACTS OF JAPAN vol. 009, no. 238 (M-416), 25. September 1985 (1985-09-25) & JP 60 093131 A (HINO JIDOSHA KOGYO KK), 24. Mai 1985 (1985-05-24)

## Beschreibung

Die Erfindung betrifft ein Verfahren zur Verbesserung der Auslegung von Antriebsträngen für Fahrzeuge, insbesondere für eine Betriebsweise in einem überwiegend genutzten Hauptbetriebsbereich, im einzelnen mit den Merkmalen aus dem Oberbegriff des Anspruchs 1, die aus der US 54 83 446 A bekannt sind.

Es ist bekannt, zur Optimierung von Antriebssträngen für Fahrzeuge während des Betriebes eines Fahrzeuges ermittelte Betriebsdaten als Basisdaten zu verwenden und anhand dieser extern, d.h. außerhalb des Fahrzeuges und nicht im Fahrbetrieb, eine Auswertung hinsichtlich der Eignung einzelner Komponenten des Antriebsstranges, insbesondere der Getriebebaueinheit oder des Achsgetriebes vorzunehmen. Stellvertretend wird dazu auf ein kundenorientiertes Betriebsauswertungssystem der Firma Voith verwiesen, bei welchem über einen bestimmten Referenzzeitraum Betriebsdaten jeweils zu den in diesem Zeitraum vom Fahrer per Gaspedal vorgebbaren Lastgeberstufen sowie getrennt davon die Zeitanteile für die einzelnen eingelegten Gangstufen erfaßt werden. Aus den sich daraus ergebenden Informationen, insbesondere den Zeitanteilen der einzelnen Gangstufen über den Referenzzeitraum, das heißt die Summe der Einzelzeiten der Einlegung einer bestimmten Gangstufe, wird vom Kundendienst oder dem Servicepersonal nach Auslesen dieser Daten aus einer der Getriebebaueinheit zugeordneten Steuervorrichtung oder einer anderen, im Fahrzeug vorgesehenen Steuervorrichtung, welche mit der Steuervorrichtung der Getriebebaueinheit gekoppelt ist, eine Aussage darüber getroffen werden, ob für den konkret vorliegenden Antriebsstrang die Achsübersetzung richtig gewählt ist oder nicht beziehungsweise ob der Kraftstoffverbrauch auf ein optimales Übertragungsverhalten hindeutet. Je nach Ergebnis wird von der Person, welche die Auswertung vornimmt, eine Entscheidung darüber getroffen, in welcher Richtung eine Veränderung der Achsübersetzung erforderlich ist und wie sich die Zeitanteile hinsichtlich der einzelnen Gangstufen in diesem Fall verschieben. So wird beispielsweise bei Erkennen einer geringen Ausnutzung eines höheren Ganges durch das Service-Personal über einen Referenzzeitraum dieses eine höhere Achsübersetzung vorschlagen, um den Zeitanteil für diesen im Referenzzeitraum wenig genutzten höheren Gang zu erhöhen. Das Auswertergebnis bezüglich der Änderung der Achsübersetzung führt entweder zum Austausch des Achsgetriebes im der Beurteilung zugrunde liegenden Antriebsstrang oder wird zur Auslegung von Antriebssträngen für ähnliche Anwendungszwecke, insbesondere bei Nachordem von Fahrzeugen vom gleichen Betreiber berücksichtigt.

Auf Basis der Zeitanteile in den Gängen ist nur eine qualitative Aussage bezüglich einer Änderung der Achsübersetzung möglich. Für eine gezielte Empfehlung der optimalen Achse ist statt dem Kollektiv "Zeitanteile in den Gängen" das Kollektiv "Zeitanteile in Geschwindigkeitsbereichen" erforderlich.

Ein wesentlicher Nachteil einer derartigen Auswertung besteht darin, daß der Kraftstoffverbrauch für eine Gangstufe unter Berücksichtigung der Lastgeberstufen nur für den gesamten Drehzahlbereich der Gangstufe ermittelt werden kann, so daß bei großen Drehzahlbereichen lediglich nur ein ungenauer Mittelwert zur Verfügung steht, der wenig aussagekräftig ist und keine hinreichende Aussage darüber erlaubt, wie sich eine Änderung der Achsübersetzung auf den Kraftstoffverbrauch in und auf das Fahrverhalten auswirken würde. Der Erfindung liegt daher die Aufgabe zugrunde, ein Verfahren zur Verbesserung der Auslegung von Antriebssträngen zu entwickeln, welches eine differenziertere Aussage bezüglich der Eignung des vorliegenden Antriebsstranges und einer Erhöhung der Qualität der Kraftstoffverbrauchsberechnung durch Mitteilung des Kraftstoffverbrauches nicht mehr über den gesamten Drehzahlbereich eines Ganges, sondern über Teilabschnitte erlaubt, wobei aus diesen Aussagen eine Empfehlung bezüglich der Auslegung der Achsübersetzung bildbar ist.

Die erfindungsgemäße Lösung ist durch die Merkmale des Anspruchs 1 charakterisiert. Vorteilhafte Ausgestaltungen sind in den Unteransprüchen wiedergegeben.

Im nachfolgenden Text verwendete Bezeichnungen sind wie folgt erklärt:
a) Referenzzeit - fest vordefinierter bzw. vorgegebener oder frei wählbarer Beurteilungszeitraum
   Dieser kann dabei einer Gesamtnutzungsdauer entsprechen, welche
   a1) durch die Summe der einzelnen Zeitintervalle des Betriebes des Fahrzeuges beschreibbar ist oder
   a2) durch ein Zeitintervall unabhängig vom Betrieb des Fahrzeuges charakterisierbars ein, d.h. auch Sillstandszeiten umfaßt.
b) Referenzstrecke - fest vordefinierte bzw. vorgegebene oder frei wählbare Beurteilungsgesamtstrecke
c) Zeitanteil - Dauer eines Zustandes bezogen auf einen bestimmten Betriebsbereich
   c1) Zeitanteil je Gangstufe - Verweildauer in einer Gangstufe bzw. Gesamtnutzungsdauer einer Gangstufe in einem Referenzzeitraum oder über einen Referenzzeitraum
   c2) Zeitanteil der Laststufe - Gesamtnutzungsdauer einer Laststufe über einen Referenzzeitraum oder eine Referenzstrecke
d) Geschwindigkeitsbereich - Fahrgeschwindigkeitsbereich bestimmter Größe in einer Gangstufe
e) Geschwindigkeitskollektiv - Verteilung der Häufigkeit der einzelnen Geschwindigkeitsbereiche in den Zeitanteilen der Gangstufen

Das Verfahren zur Optimierung eines Antriebsstranges für Fahrzeuge, umfassend eine Antriebsmaschine und eine Getriebebaueinheit beim Wechsel zwischen wenigstens zwei Gangstufen, insbesondere für einen überwiegend genutzten Anwendungsbereich, wobei die Ansteuerung der Schaltelemente der Getriebebaueinheit zum Wechsel zwischen zwei Gangstufen unter Ausnutzung eines Schaltverfahrens zur Realisierung einer definierten Schaltkennlinie oder innerhalb eines Schaltkennfeldes erfolgt, wird erfindungsgemäß dahingehend modifiziert, daß neben der Erfassung der Zeitanteile für die einzelnen Gangstufen eine Zuordnung der Zeitanteile einer jeden Gangstufe zu einzelnen Geschwindigkeitsbereichen vorgenommen wird und des weiteren eine Häufigkeitsverteilung der Geschwindigkeitsbereiche im Zeitanteil der jeweiligen Gangstufe gebildet wird. Dazu werden die, die Zeitanteile für die einzelnen Gangstufen wenigstens mittelbar charakterisierenden Größen erfaßt und desweiteren die für die Charakterisierung der Geschwindigkeitsbereiche in den Zeitanteilen erforderlichen Größen.

Aus der Häufigkeitsverteilung der Geschwindigkeitsbereiche in den Zeitanteilen einer Gangstufe wird ein Geschwindigkeitskollektiv ermittelt. In einem weiteren Verfahrensschritt wird dann das sich ergebende Geschwindigkeitskollektiv für alle Gangstufen hinsichtlich des Kraftstoffverbrauches ausgewertet. Dazu erfolgt zuerst eine Übertragung der damit verbundenen Auswirkungen auf die Motordrehzahl und die Erstellung einer Häufigkeitsmatrix für die einzelnen Motordrehzahlen in den entsprechenden Gangstufen. Durch die Multiplikation mit den Zeitanteilen kann der jeweils spezifische Verbrauch der dabei betrachteten Drehmoment /Drehzahlbereiche ermittelt werden und damit der Kraftstoffverbrauch einer zu betrachtenden Gangstufe. Wird ersichtlich, daß die Geschwindigkeitsbereiche, welche durch hohen Kraftstoffverbrauch charakterisiert sind, einer anderen Gangstufe zugeordnet werden sollten, wird eine Empfehlung zur Änderung der Achsübersetzung gegeben und in einer Weiterentwicklung bereits vorgeschlagen.

Die Betriebsdatenerfassung erfolgt vorzugsweise über die der Getriebebaueinheit zugeordnete Steuervorrichtung. Denkbar ist jedoch auch eine Erfassung in einer, der Steuervorrichtung der Getriebebaueinheit übergeordneten Steuervorrichtung und der Kommunikation der beiden Steuervorrichtungen über eine elektrische Kopplung oder ein Datenkommunikationsnetzwerk , beispielsweise Can-Bus. Bei dem das Schaltverfahren beschreibenden Schaltprogramm kann es sich dabei um ein
a) Schaltprogramm mit festen Umschaltpunkten oder vorzugsweise
b) Schaltprogramm mit variablen Schaltpunkten, das heißt ein beschleunigungsabhängiges Schaltprogramm
handeln.

Die beschleunigungsabhängigen Schaltprogramme können des weiteren hinsichtlich der gewünschten Anforderungen an das Fahrzeug leistungsorientiert oder verbrauchsoptimiert gestaltet werden. Das Grundprinzip der beschleunigungsabhängigen Schaltung besteht darin, daß je nach Erfordernis beziehungsweise Fahrwiderstand sowie als Funktion der tatsächlichen Beschleunigung bei kleineren oder größeren Antriebsbeziehungsweise Motordrehzahlen geschaltet wird, je nachdem ob niedriger Kraftstoffverbrauch oder eine ausreichende Beschleunigung zu bevorzugen ist. Für den Schaltvorgang selbst ist die Beschleunigung des Fahrzeuges beziehungsweise dessen Verzögerung maßgebend. Dabei werden immer die zwei folgenden Grenzfahrzustände beziehungsweise Beschleunigungen berücksichtigt:
1. geringe Fahrzeugbelegung in ebenem oder abschüssigem Gelände = hohe Fahrzeugbeschleunigung, und
2. hohe Fahrzeugbelegung bei ansteigendem Gelände = geringe Fahrzeugbeschleunigung.

Dabei ergibt sich im erstgenannten Fall eine hohe Fahrzeugbeschleunigung bei niedrigen Antriebsdrehzahlen. Eine Hochschaltung der Gänge kann daher bereits vorzeitig bei relativ niedriger Motordrehzahl erfolgen, was zu einer Senkung des Kraftstoffverbrauches führt. Aus dem gleichen Grund erfolgt auch die Rückschaltung der Gänge bei kleinerer Verzögerung mit niedriger Motordrehzahl. Im zweiten Fall ist eine größere Antriebsleistung erforderlich, weshalb die Hochschaltung erst bei relativ großen Motordrehzahlen erfolgt. In Abhängigkeit von der gemessenen Fahrzeugbeschleunigung beziehungsweise Verzögerung erfolgt die Hoch- oder Rückschaltung der Gänge jeweils zwischen diesen beiden Fahrzuständen gleitend, das heißt in einem sogenannten Schalt-Drehzahlbereich. Der Schalt-Drehzahlbereich selbst ist außerdem von der Laststufe abhängig. Bei größerer Last wird demzufolge auch bei höherer Drehzahl geschaltet. Der sich daraus ergebende Beschleunigungs-/Abtriebsdrehzahl-Kennlinienverlauf weist im Beschleunigungs-/Abtriebsdrehzahl-Diagramm einen gestuften Verlauf auf. Dieser gestufte Verlauf wird dabei durch die beiden Grenzzusstände geringer Fahrzeugbelegung in ebenem oder abschüssigem Gelände und hohe Fahrzeugbelegung bei ansteigendem Gelände gebildet.

Zur Berücksichtigung der Schaltdrehzahlen bei Schaltverfahren mit variablen Schaltpunkten wird eine Mittelwertbildung aus den einzelnen erfaßten Schaltdrehzahlen vorgenommen.

Die Empfehlung zur Änderung der Achsübersetzung kann
a) extern nach Auslesen der entsprechenden Betriebsdaten und Auswertung durch das Service-Personal oder andere berechtigte Personen erfolgen oder
b) automatisch in der Steuervorrichtung der Getriebebaueinheit oder einer dieser übergeordneten Steuervorrichtung während des Betriebes erfolgen, wobei diese ausgelesen werden müßte.

In beiden Fällen kann das Auslesen automatisch durch Übermittlung beispielsweise via Funk an einen Leitrechner zur weiteren Bearbeitung oder aber manuell oder auf Wunsch oder nach Ablauf bestimmter Zeitintervalle erfolgen.

Im wesentlichen können beide Anwendungsfälle gleichberechtigt betrachtet werden. Vorzugsweise wird der erstgenannte Fall zum Einsatz gelangen, da die Differenzzeiträume in der Regel sehr groß gewählt werden, so daß diese auch mit den in der Regel erforderlichen Überwachungen und Kundendienst-Inanspruchnahmen übereinstimmen.

Als Betriebsdaten werden im wesentlichen die nachfolgend genannten fortlaufend oder z.T. in bestimmten Zeitintervallen ermittelt:
- Betätigung der einzelnen Schaltelemente in den einzelnen Gangstufen
- Erfassung der Zeiten der Betätigung der Schaltelemente und Verweildauer in der jeweiligen Gangstufe gegebenenfalls falls durch die Fahrzeugkonfiguration bekannt
- Vorliegen der Ist-Achsübersetzung
- gewähltes Schaltprogramm
- Erfassung der Schaltpunkte, im einzelnen der Schaltdrehzahlen
- Ermittlung der einzelnen Drehzahlen der Antriebsmaschine und/oder des Abtriebes
- Ermittlung des Kollektives der Lastgeberstufen der Antriebsmaschine.

Wesentlich und damit zwingend erforderlich ist jedoch die Ermittlung der Betriebsdaten zur Beschreibung der Zeitanteile in den Gangstufen, des Kollektives der Lastgeberstufen der Antriebsmaschine und der Drehzahlen beziehungsweise Drehzahlbereichen des Einlegens der Wandlerbremse beziehungsweise des Retarders. Die direkte Erfassung bedeutet, daß mittels geeigneter Erfassungsmitteln die entsprechenden Betriebsdaten erfaßt und zur Steuervorrichtung weitergeleitet werden. Indirekte Erfassung bedeutet, daß die, die genannten Betriebsdaten wenigstens mittelbar charakterisierenden Größen erfaßt werden und aus diesen die Betriebsdaten abgeleitet, beispielsweise rechnerisch ermittelt werden.

Weitere Größen, die zur Beurteilung erforderlich sind und die nicht als Betriebsdaten gespeichert werden, sondern bereits über die Fahrzeugkonfiguration bekannt sind, sind:
- die aktuelle Achsübersetzung i_{Achs}
- ggf. das gewählte beziehungsweise vorgegebene ist - Schaltprogramm S_{V}, welches als Standardschaltprogramm im Antriebsstrang vorsehen sein kann und
- die eine Gangstufe wenigstens mittelbar charakterisierenden Größen

In einer weiteren Ausführungsform des erfindungsgemäßen Verfahrens werden zur Zuordnung der Zeitanteile in den Gangstufen zu Bereichen der Geschwindigkeiten bei nicht detailierter Erfassung aller dafür erforderlichen Betriebsdaten die Zeitanteile für die eingelegten Lastgeberstufen, die Ist-Achsübersetzung und das gewählte Schaltprogramm sowie die Schaltpunkte beziehungsweise die diese charakterisierenden Größen ermittelt. Die Aufsplittung der Zeitanteile in den oberen Gängen erfolgt dabei in Geschwindigkeitsklassen einer bestimmten Klassenbreite, welche vordefiniert oder bestimmt sein kann. Beispielsweise wird eine Klassenbreite von 5 bis 10 km pro Stunde gewählt. Als Hilfsmittel werden dabei die Zeitanteile des Einlegens der Wandlerbremseinrichtung über der Abtriebsdrehzahl erfaßt. In einem weiteren Schritt werden die restlichen Zeitanteile in den jeweiligen Gangstufen auf Basis einer aus der mittleren Geschwindigkeit resultierenden Geschwindigkeitsverteilung aufgesplittet. Dazu erforderlich ist die Bestimmung der mittleren Geschwindigkeit, woraus die Bestimmungen des Verteilungsparameters der Geschwindigkeitsverteilung ableitbar sind.

Die erfindungsgemäße Lösung dient der Auswahl des geeigneten Schaltprogrammes für einen konkreten Einsatzfall. Bezüglich der konkreten Ausgestaltung der Schaltprogramme, insbesondere beschleunigungsabhängig oder beschleunigungsabhängig leistungsorientiert oder beschleunigungsabhängig verbrauchsorientiert bestehen keine Beschränkungen. Die konkrete Auswahl erfolgt jeweils gemäß den Erfordernissen des Einsatzfalles.

Die erfindungsgemäße Lösung wird nachfolgend anhand von Figuren erläutert. Darin ist im einzelnen folgendes dargestellt:
- Fig. 1a und Fig. 1b: verdeutlichen anhand eines Blockschaltbildes und eines Flußdiagrammes das Grundprinzip des erfindungsgemäßen Verfahrens;
- Figur 2: verdeutlicht in schematisch vereinfachter Darstellung anhand eines Blockschaltbildes eine Möglichkeit der externen, d.h. außerhalb des Fahrzeuges erfolgenden Durchführung des erfindungsgemäßen Verfahrens;
- Figur 3: verdeutlicht anhand eines Flußdiagrammes konkret ein Verfahren zur Auswertung der Betriebsdaten.

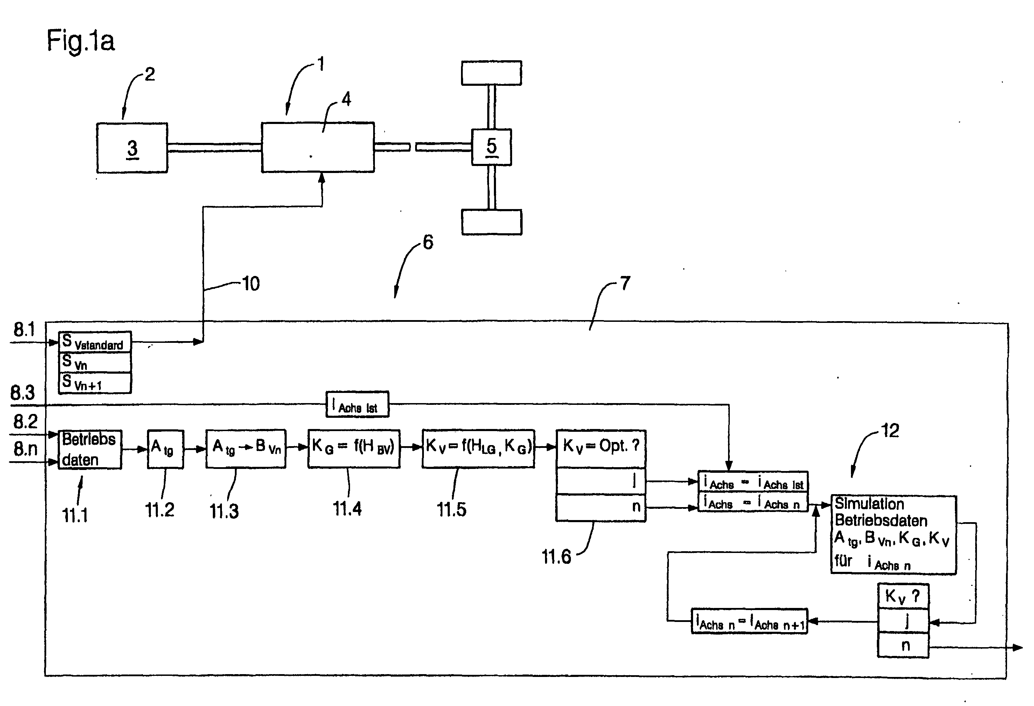

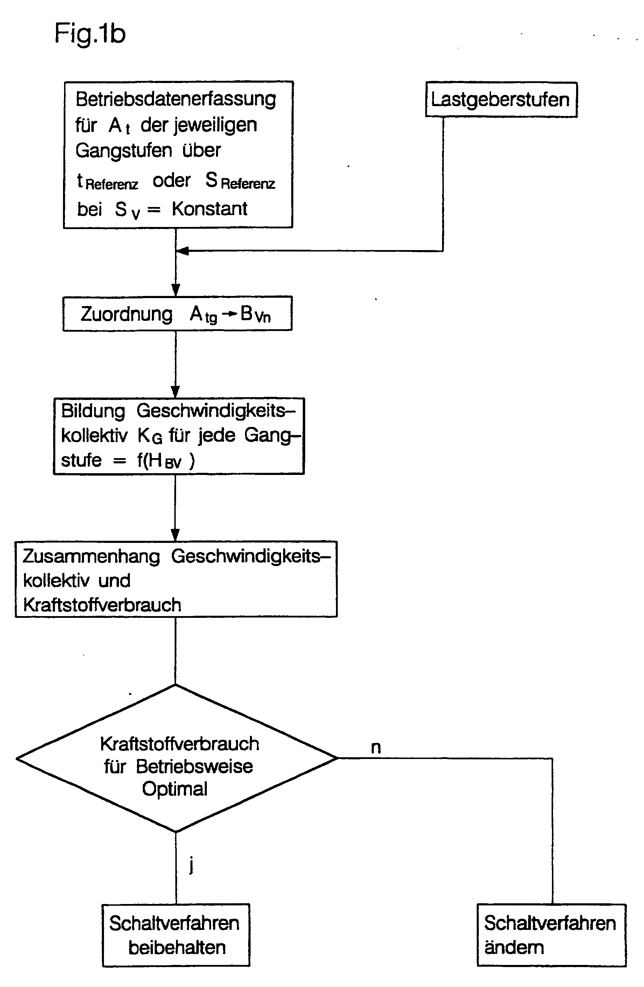

Die Figuren 1a und 1b verdeutlichen in schematisch vereinfachter Darstellung anhand eines Blockschaltbildes und eines Flußdiagrammes das Grundprinzip des erfindungsgemäßen Verfahrens zur Optimierung eines Antriebsstranges für Fahrzeuge. Gemäß Figur 1a umfaßt der Antriebsstrang 1 mindestens eine Antriebsmaschine 2, welche beispielsweise als Verbrennungskraftmaschine 3 ausgeführt ist, eine Getriebebaueinheit 4 und eine Achsgetriebebaueinheit 5, welche in Kraftflußrichtung von der Antriebsmaschine 2 zur Getriebebaueinheit 4 dieser nachgeschaltet ist und das an der Getriebeausgangswelle anliegende Drehmoment bzw. die dort abnehmbare Drehzahl entsprechend der Übersetzung wandelt. Der Getriebebaueinheit 4 ist eine Steuervorrichtung 6, umfassend eine Steuereinrichtung zugeordnet. Die Steuervorrichtung 6 kann dabei, hier nicht dargestellt, entweder als autarke, nur der Getriebebaueinheit 4 zugeordnete Steuervorrichtung oder Bestandteil einer neben- oder übergeordneten Steuervorrichtung, beispielsweise der Fahrsteuerung sein, oder mit einer neben- oder übergeordneten Fahrsteuerung gekoppelt oder über ein Datenkommunikationsnetzwerk mit anderen Antriebskomponenten beziehungsweise den diesen zugeordneten Steuervorrichtungen verbunden werden. Die Ausführung der Steuervorrichtung und Zuordnung beziehungsweise Einordnung hinsichtlich der Priorität gegenüber anderen Steuervorrichtungen hängt dabei konkret vom Einsatzfall ab.

Über die Steuervorrichtung 6 erfolgt die Ansteuerung der Betätigungseinrichtungen einzelner Schaltelemente der Getriebebaueinheit 4 zur Realisierung des Wechsels von einer, die Betriebsweise der Getriebebaueinheit 4 charakterisierenden Ausgangsgangstufe in eine Zielgangsstufe entsprechend den Erfordernissen des Anwendungsfalles. Die einzelnen Gangstufen bestimmen dabei die Ausnutzung bestimmter Drehzahlbereiche der Antriebsmaschine bezogen auf den Gesamtarbeitsbereich der Antriebsmaschine. Die Ansteuerung erfolgt dabei im allgemeinen mittels vorgegebener Schaltprogramme, welche ein Verfahren zur Steuerung der einzelnen Getriebeelemente der Getriebebaueinheit 4 hinsichtlich bestimmter Zielkriterien und unter Berücksichtigung der vorliegenden Randbedingungen beschreiben. Der Begriff Schaltprogramm ist dabei derart zu verstehen, daß bei Erfassung der den aktuellen Betriebszustand des Fahrzeuges wenigstens mittelbar charakterisierenden Größen und des Fahrerwunsches in Abhängigkeit dessen die Umschaltpunkte vordefiniert oder berechenbar sind. Jedes Schaltprogramm ist dabei durch sogenannte Schaltkennlinien beschreibbar, welche den Übergang zwischen zwei aufeinanderfolgenden Gangstufen - einer Ausgangsgangstufe und einer Zielgangsstufe - bestimmen. Dabei können die Umschaltpunkte zwischen den einzelnen Gangstufen, d.h. die Schaltdrehzahlen, fest vorgegeben oder vorzugsweise frei einstellbar sein, beispielsweise entsprechend des Einsatzfalles. Die Steuereinrichtung weist dazu mindestens einen Eingang 8 auf, über welchen die dem Betriebszustand des Fahrzeuges wenigstens mittelbar charakterisierenden Größen der Steuervorrichtung 6 zuführbar sind. Dabei kann bei serieller Datenübertragung bereits ein Eingang 8 ausreichend sein, während bei paralleler Datenübertragung entsprechend der Anzahl der zur Auswertung des Ist-Zustandes der Betriebsweise des Antriebsstranges 1 eine bestimmte Anzahl an Eingängen 8.1-8.n vorzusehen wäre. Entsprechend den Ist-Werten und einem bestimmten Fahrerwunsch nach Beschleunigung oder Verzögerung beziehungsweise einem bestimmten Fahrverhalten, welcher entweder ebenfalls am Eingang 8 bei serieller Datenübertragung oder als Signal an einem weiteren Eingang 8.n der Steuereinrichtung 7 zuführbar ist, erfolgt die Ansteuerung der einzelnen Elemente der Getriebebaueinheit 4 entsprechend eines bestimmten Schaltprogrammes. Dieses ist vorzugsweise in einer Auswerteinrichtung 9 der Steuereinrichtung 6 hinterlegt. In der Auswerteinrichtung 9 werden dabei die Eingangsgrößen, insbesondere die an den Eingängen 8.1-8.n anliegenden, den aktuellen Ist-Zustand der Betriebsweise des Fahrzeuges wenigstens mittelbar beschreibenden Größen und die den Fahrerwunsch nach einem bestimmten Fahrverhalten wenigstens mittelbar beschreibenden Größen ausgewertet und entsprechend des aktuell gewählten Schaltprogrammes die einzelnen Elemente der Getriebebaueinheit 4 durch Ausgabe der entsprechenden Stellgrößen am Ausgang 10 beziehungsweise einer Mehrzahl von Ausgängen 10.1 bis 10.n angesteuert.

Erfindungsgemäß wird dabei die Betriebsweise der Getriebebaueinheit 4 und damit die Ausnutzung der einzelnen Gangstufen GS über den Gesamt-Betriebsbereich der Antriebsmaschine 2 über einen Referenz-Zeitraum t_{referenz} und/oder eine Referenz-Gesamtstrecke s_{referenz} an gefahrenen Kilometern ermittelt. Als Referenzzeit t_{referenz} kann dabei eine bestimmte Gesamtbetriebsdauer des Fahrzeuges angesehen werden, welche beispielsweise einem Nutzungsintervall entspricht, das den Zeitraum zwischen zwei Durchsichten bzw. Kundendienstchecks beschreibt, während als Referenzstrecke s_{referenz} eine bestimmte vordefinierbare Nutzungs-Gesamtstrecke bezeichnet wird.

Die Figur 1b verdeutlicht anhand eines Flußdiagrammes die Vorgehensweise bezüglich der Optimierung des Antriebsmaschinen-Getriebemanagementes. Dieses umfaßt im ersten Schritt die Betriebsdatenerfassung. Zu diesen Betriebsdaten gehören dabei die einzelnen Lastgeberstufen, die sich mit den Schaltprogrammen ergebenden Schaltdrehzahlen, wobei letztere auch ermittelt werden können, sowie die eine Gangstufe wenigstens mittelbar charakterisierenden Größen und die die Verweildauer in einer Gangstufe wenigstens mittelbar charakterisierenden Größen. Die aktuelle Ist-Achsübersetzung i_{Achs} ist dabei aufgrund der Fahrzeugkonfiguration bekannt und entweder in der Steuervorrichtung der Getriebebaueinheit oder einer dieser übergeordneten Steuervorrichtung gespeichert. Vorzugsweise werden die die Gangstufe unmittelbar charakterisierenden Größen, beispielsweise die Betätigung der Schaltelemente oder die Schaltdrehzahlen, und die die Verweildauer in einer Gangstufe unmittelbar charakterisierende Größe in Form der Zeit t erfaßt. Dabei wird in einem ersten Schritt der Zeitanteil A_{tg} einer Gangstufe im Bezug auf die Gesamtbetriebsdauer t_{referenz} beziehungsweise die Gesamt-Nutzungsstrecke s_{referenz} ermittelt. Für die weitere Auswertung werden die Lastgeberstellungen LG in den Zeitanteilen A_{tg} erfaßt. Bereits hier ist eine Grundbeurteilung über die Eignung des vorliegenden Antriebsstranges und damit der Achsübersetzung möglich. Jedoch besteht keine Möglichkeit der Ableitung einer Vorgehensweise. Daher werden in einem weiteren zweiten Verfahrensschritt die Zeitanteile der Gangstufen A_{tg} aufgesplittet, indem diese Geschwindigkeitsbereichen Bᵥ zugeordnet werden. Aus dieser Zuordnung wird ein Geschwindigkeitskollektiv KG in Abhängigkeit der Häufigkeit der Geschwindigkeitsbereiche gebildet, welches eine Aussage über den Anteil des Zeitanteiles erlaubt, der durch das Betrieben des Fahrzeuges mit einer bestimmten Geschwindigkeit bei Fahrt mit einem bestimmten Gang beschreibbar ist. Des weiteren kann zusätzlich aus den ermittelten Betriebsdaten auf den Hauptanwendungsfall für den Referenzzeitraum t_{referenz} und/oder die Referenzstrecke s_{referenz} geschlossen werden. Im Zusammenhang der ermittelten Betriebsdaten, insbesondere der Geschwindigkeitsverteilung in den Gangstufen GS und des Anwendungsfalles über den Referenzzeitraum t_{referenz} oder die Referenzstrecke s_{referenz} wird eine Auswertung bezüglich des im Referenzzeitraum angefallenen Kraftstoffverbrauches und des Fehlverhaltens insbesondere für einen Hauptanwendungsfall vorgenommen. Dieses kann beispielsweise wie folgt definiert werden:
1. Fahren mit geringer Geschwindigkeit und/oder häufigem Stop- and Go-Verkehr unter hauptsächlicher Ausnutzung der unteren Gangstufen = Betriebszyklus "Stadtverkehr".
2. Fahren mit höherer Geschwindigkeit unter hauptsächlicher Ausnutzung der höheren Gangstufen = Betriebszyklus "Überlandverkehr"
3. Misch-Betrieb - im wesentlichen gleichmäßige Ausnutzung beider Anwendungsbereiche.

Der erste Betriebszyklus charakterisiert dabei im wesentlichen das Fahren in der Stadt und die damit verbundenen Anforderungen, während der zweite Betriebszyklus im wesentlichen das Verhalten bei Überlandfahrten beschreibt. Der dritte Betriebszyklus bildet dabei eine Mischform aus den beiden vorgenannten, wobei in diesem Fall keine eindeutige Zuordnung hinsichtlich der Gewichtung der Nutzung der einzelnen Gangstufen zu einem der vorgenannten Betriebszyklen erfolgt.

Die ermittelten Ist-Werte werden dann in der Auswerteinrichtung 9 ausgewertet und dementsprechend eine Auswertung des Geschwindigkeitskollektivs im Hinblick auf den Kraftstoffverbrauch getroffen. Ergibt die Auswertung, daß das mit der im Antriebsstrang vorliegenden Achsübersetzung keine optimalen Verbrauchswerte für den Anwendungsbereich erzielt werden können, wird eine Empfehlung zur Vornahme einer Änderung der Achsübersetzung gegeben. Dies bedeutet im einzelnen, daß mit einer anderen Achsübersetzung eine optimalere Geschwindigkeitsverteilung in den einzelnen Gangstufen einzustellen wäre, wobei die Auswahl der entsprechenden geeigneteren Achsübersetzung in der Regel vorzugsweise auch durch Simulationsberechnungen erfolgen kann. Dabei werden für die zur Verfügung stehenden theoretisch möglichen Achsübersetzungen, welche bereits in der Steuervorrichtung 6 der Getriebebaueinheit 4 hinterlegt sein können, oder aber beispielsweise beim Hersteller oder Kundendienst verfügbar sind, für die im aktuellen Referenzzeitraum t_{referenz} ermittelten Daten einer Simulation der Betriebsweise unterzogen und die sich daraus ergebenden Zeitanteile und Geschwindigkeitskollektive gebildet und ausgewertet. Entsprechend des Ergebnisses wird eine Änderung der Achsübersetzung angestrebt. Die Simulation erfolgt dabei für eine bestimmte theoretisch mögliche Achsübersetzung i_{Achsn}. Entsprechend des Simulationsergebnisses wird dann eine Empfehlung für die theoretisch mögliche Achsübersetzung i_{Achsn} gegeben oder aber eine weitere Simulation mit einer theoretisch möglichen Achsübersetzung i_{Achsn+1} durchgeführt. Die Betriebsdatenerfassung erfolgt dabei am Fahrzeug. Die Auswertung kann dabei wie in Figur 1a verdeutlicht vollständig oder wenigstens teilweise in der Steuervorrichtung 6 des Fahrzeuges vorgenommen werden. Dazu umfaßt die Steuereinrichtung 7 entsprechende Erfassungs- Bildungs- und Auswerteinrichtungen. Diese sind hier mit 11.1- 11.n bezeichnet. Desweiteren ist in diesem Fall eine Simulationseinrichtung 12 erforderlich. Die Auswertung erfolgt automatisch. Möglich ist auch eine Auswertung manuell anhand einer Entscheidungsmatrix.

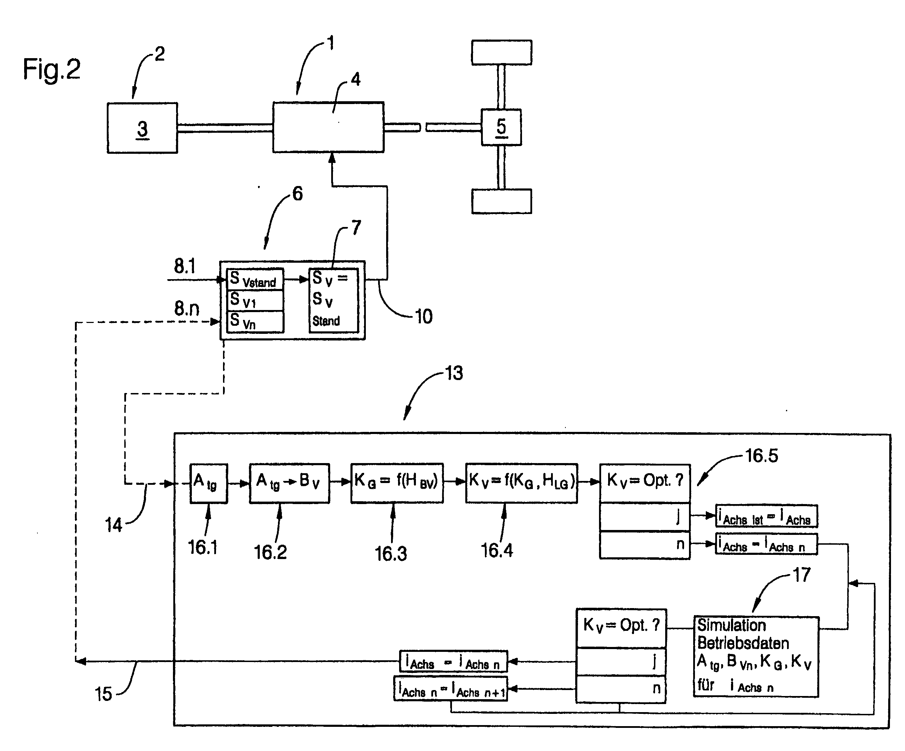

Eine weitere Möglichkeit ist in Figur 2 dargestellt. Hierbei erfolgt lediglich das Auslesen der Betriebsdaten aus der Steuereinrichtung 7 der Getriebebaueienheit. Die zur Auswertung erforderlichen Verfahrensschritte erfolgen extern, beispielsweise im Rahmen eines Kundendienstservices außerhalb des Fahrzeuges. Dazu ist eine entsprechende Erfassungs-und Auswertvorrichtung 13 vorgesehen. Diese umfaßt eine Erfassungs- und Auswerteinrichtung 18. Die Erfassungs- und Auswerteinrichtung 18 ist zum Auslesen der Betriebsdaten zur Auswertung der Nutzung eines bestimmten Schaltverfahrens während eines Referenzzeitraumes t_{referenz} für einen Hauptanwendungsbereich mit der Steuervorrichtung 6 der Getriebebaueinheit 4 verbindbar. Über wenigstens einen Eingang 14 werden dabei die Betriebsdaten eingelesen. Die Auswertung erfolgt über entsprechende Berechnungs- Zuordnungs- und Auswerteinheiten 16.1-16.n sowie eine Simulationseinrichtung 17 für den Fall, daß die Auswertung mit den Betriebsdaten bei unbefriedigendem Übertragungsverhalten für ein weiteres Schaltprogramm vorgenommen werden muß. Das Ergebnis wird am Ausgang 15 ausgegeben und enthält eine Empfehlung zur Beibehaltung oder Änderung der Achsübersetzung.

In einer weiteren, hier nicht dargestellten Ausführung können Auswertvorrichtung 13 und die Auswerteinrichtung 18 im Steuergerät integriert sein, wobei nur die Simulationsvorrichtung außerhalb der Steuereinrichtung 7 angeordnet ist, vorzugsweise extern beim Kundendienst oder einer anderen berechtigten Person.

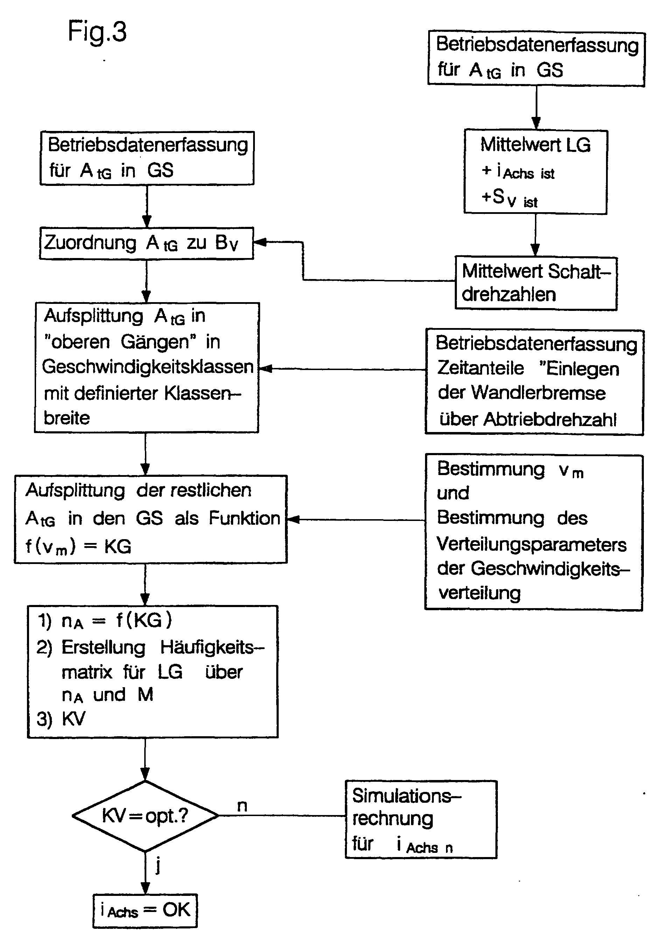

Vorzugsweise wird bei Zurverfügungstehen entsprechender Speicherkapazität erstere Variante genutzt, wobei bezüglich der Betriebsdatenerfassung eine Vielzahl von Daten über einen erheblich langen Zeitraum zu verwalten sind und entsprechend gepflegt werden müssen. Da jedoch die Beurteilungszeiträume in der Regel sehr lang bemessen werden, genügt eine externe Auswertung über den Kundendienstservice. Dazu werden nicht alle die Verweildauer in den einzelnen Gangstufen wenigstens mittelbar charakterisierenedn Größen fortlaufend gespeichert, sondern die Zeitanteile in den jeweiligen Gängen über einen bestimmten Referenzzeitraum oder eine Referenzstrecke ermittelt und die zur Bestimmung der Geschwindigkeitsbereiche erforderlichen Größen. Dieses Verfahren ist im Flußdiagramm gemäß Figur 3 wiedergegeben.

In einem ersten Schritt werden dabei die Zeitanteile A_{tg} in den jeweiligen Gangstufen GS ermittelt, das heißt die Zeitdauer der Nutzung der Gangstufen über einen bestimmten Referenzzeitraum t_{referenz} und/oder eine Referenzstrecke s_{referenz}. Unter einem weiteren Aspekt der Erfindung werden dabei die Zeitanteile A_{tg} in den Gängen zu Bereichen der Geschwindigkeit Bᵥ zugeordnet. Dazu ist es erforderlich, zusätzliche Betriebsdaten zu erfassen. Im einzelnen werden dabei in einem Schritt 2.1 die Zeitanteile A_{tLG} der Lastgeberstufen sowie in einem weiteren Schritt 2.2 ein Mittelwert für die Lastgeberstufen, das heißt der über den Referenzzeitraum beziehungsweise der Referenzstrecke eingestellte Wert der Lastgeberstellung, gebildet, die Achsübersetzung i_{Achs} sowie das gewählte Schaltprogramm S_{V} und der in einem weiteren Schritt 2.3 aus den dem Schaltprogramm zugeordneten Schaltpunkten gebildete Mittelwert herangezogen werden. Dabei erfolgt in einem weiteren dritten Schritt das Aufsplitten der Zeitanteile A_{tg} in den oberen Gängen in entsprechende Geschwindigkeitsklassen KG mit einer bestimmten vordefinierbaren Klassenbreite. Die Klassenbreite entspricht dabei beispielsweise 5 bis 10 km/h, andere Bereichsuntergliederungen sind ebenfalls denkbar. Dieses Aufsplitten der Zeitanteile erfolgt vorzugsweise mit Hilfe der Betriebsdatenerfassung, insbesondere die Erfassung der Zeitanteile des Einlegens der Wandlerbremse über der Abtriebsdrehzahl, das heißt der Ausgangsdrehzahl n an der Getriebeausgangswelle. Die Zuordnung der restlichen Zeitanteile in den jeweiligen Gängen, insbesondere in den unteren Gängen erfolgt auf der Basis einer, aus einer mittleren Geschwindigkeit vₘ resultierenden Geschwindigkeitsverteilung. Die Bestimmung der mittleren Geschwindigkeit vₘ erfolgt dabei ebenfalls über den gesamten Referenzzeitraum t_{referenz} beziehungsweise die gesamte Referenzstrecke s_{referenz}. Aus dieser wird die Bestimmung des Verteilungsparameters der Geschwindigkeitsverteilung und damit das Geschwindigkeitskollektiv abgeleitet. Diese Geschwindigkeitsverteilung wird dabei als Charakteristikum für den Anwendungsfall angesehen. In einem weiteren fünften Schritt wird dann das Geschwindigkeitskollektiv im Hinblick auf den Kraftstoffverbrauch bewertet. Dies kann beispielsweise durch Übertragung auf die Motordrehzahl oder die Aufteilung anhand der Häufigkeit der Lastgeberstufen in Form einer Häufigkeitsmatrix über der Drehzahl und dem Drehmoment erfolgen. Entsprechend des Ergebnisses wird dann eine Empfehlung über die Eignung der momentan genutzten Achsübersetzung gegeben. D.h. es ist erkennbar, ob die gewählte Achsübersetzung für den aktuellen Hauptanwendungsfall geeignet ist oder nicht. Dem entsprechend erfolgt eine Anpassung durch Auswahl einer geeigneteren Übersetzung.

Die erfindungsgemäße Lösung ist nicht auf die Ausführung gemäß der Figuren 1 und 2 beziehungsweise die Betriebsdatenerfassung und Auswertung gemäß Figur 3 beschränkt. Denkbar ist auch eine fortlaufende Betriebsdatenerfassung und Speicherung in der Getriebebaueinheit. Die Auswertung und Auswahl des Schaltprogrammes kann dabei selbstlernend über die Steuervorrichtung erfolgen. Denkbar sind jedoch auch Anpassungen, die über das Service-Personal durch Auslesen der Daten vorgenommen werden. Dies hängt im einzelnen von der konkreten Ausgestaltung der Steuervorrichtung ab.

### Bezugszeichenliste

- 1: Antriebsstrang
- 2: Antriebsmaschine
- 3: Verbrennungskraftmaschine
- 4: Getriebebaueinheit
- 5: Achsgetriebebaueinheit
- 6: Steuervorrichtung
- 7: Steuereinrichtung
- 8, 8.1-8.n: Eingang
- 9: Auswerteinrichtung
- 10: Ausgang
- 10.1-10.n: Ausgang
- 11.1-11.n: Erfassungs- Bildungs- und Auswerteinrichtungen
- 12: Simulationseinrichtung
- 13: Erfassungs-und Auswertvorrichtung
- 14: Eingang
- 15: Ausgang
- 16: Berechnungs- Zuordnungs- und Auswerteinheiten
- 17: Simulationseinrichtung
- 18: Erfassungs-und Auswerteinrichtung
- t_{referenz}: Referenzzeit
- s_{referenz}: Referenzstrecke
- A_{tg}: Zeitanteil einer Gangstufe
- Bᵥ: Geschwindigkeitsbereiche
- KG: Geschwindigkeitskollektiv
- KV: Kraftstoffverbrauch
- S_{Vstandard}: Standardschaltprogramm
- LG: Lastgeberstufen

## Patentansprüche

1. Verfahren zur Verbesserung der Auslegung eines Antriebsstranges für Fahrzeuge, umfassend eine Antriebsmaschine (2), eine mit dieser koppelbare Getriebebaueinheit (4) zur Realisierung wenigstens zweier unterschiedlicher Gangstufen und ein zwischen Getriebebaueinheit und den anzutreibenden Rädern angeordnetes Achsgetriebe (5), wobei die Ansteuerung der Schaltelemente der Getriebebaueinheit zum Wechsel zwischen zwei Gangstufen unter Ausnutzung eines Schaltverfahrens zur Realisierung einer definierten Schaltkennlinie oder eines Schaltkennfeldes erfolgt, insbesondere für einen überwiegend genutzten Betriebszyklus, **dadurch gekennzeichnet, daß** für die Schaltvorgänge nach einem bestimmten Schaltverfahren
1.1 der Zeitanteil der Nutzung einer jeden Gangstufe über einen Referenzzeitraum oder eine Referenzstrecke für ein Schaltverfahren ermittelt wird;
1.2 die Lastgeberstufen in den Zeitanteilen ermittelt werden;
1.3 die Zeitanteile in den Gangstufen Geschwindigkeitsbereichen zugeordnet werden und aus der Zuordnung ein Geschwindigkeitskollektiv für jede Gangstufe in Abhängigkeit der Häufigkeit der Geschwindigkeitsbereiche erstellt wird;
1.4 das Geschwindigkeitskollektiv hinsichtlich des erfolgten Kraftstoffverbrauches unter Berücksichtigung der Lastgeberstufen ausgewertet wird und
1.5 bei einem für den Betriebszyklus ungünstigen Kraftstoffverbrauch und/oder einer schlechten Fahrdynamik eine Empfehlung zur Änderung der Übersetzung der Achsgetriebeeinheit (5) gegeben wird.

2. Verfahren nach Anspruch 1, **dadurch gekennzeichnet, daß** zur Ermittlung der Zeitanteile der Nutzung der einzelnen Gangstufen wenigstens eine, die eingelegte Gangstufe wenigstens mittelbar charakterisierende Größe und eine die Zeitdauer der Einlegung einer Gangstufe wenigstens mittelbar beschreibende Größe erfaßt werden.

3. Verfahren nach einem der Ansprüche 1 oder 2, **dadurch gekennzeichnet, daß** die Zuordnung der Zeitanteile in den Gangstufen zu Geschwindigkeitsbereichen durch nachfolgend genannte Verfahrensschritte charakterisierbar ist:
3.1 Festlegung der Geschwindigkeitsgrenzen für jede Gangstufe anhand des tatsächlich genutzten Schaltverfahrens;
3.2 Ermittlung der Schaltdrehzahlen der Antriebsmaschine anhand eines Lastgeberkollektives.

4. Verfahren nach Anspruch 3, **dadurch gekennzeichnet, daß** bei Vorliegen eines Schaltverfahrens mit variablen Schaltdrehzahlen jeweils ein Mittelwert für die Schaltdrehzahlen zum Wechsel zwischen zwei Gangstufen gebildet wird.

5. Verfahren nach Anspruch 4, **dadurch gekennzeichnet, daß** der Wechsel zwischen den Gangstufen beschleunigungsabhängig erfolgt und Zeitanteile für die Lastgeberstufen, ein Mittelwert für die Lastgeberstufen und Achsübersetzung ermittelt werden.

6. Verfahren nach einem der Ansprüche 1 bis 5, **dadurch gekennzeichnet, daß** zur Erstellung des Geschwindigkeitskollektives die Zeitanteile in den oberen Gangstufen in Geschwindigkeitsklassen einer bestimmten Klassenbreite unterteilt werden.

7. Verfahren nach Anspruch 6, **dadurch gekennzeichnet, daß** zur Erstellung des Geschwindigkeitskollektives die Zeitanteile in den oberen Gangstufen in Geschwindigkeitsklassen aus dem Bremsdatenkollektiv bestimmt werden.

8. Verfahren nach Anspruch 6, **dadurch gekennzeichnet, daß** die Aufsplittung der restlichen Zeitanteile in den jeweiligen Gängen auf der Basis einer sich aus der mittleren Geschwindigkeit ergebenden Geschwindigkeitsverteilung vorgenommen wird.

9. Verfahren nach Anspruch 1 bis 8, **dadurch gekennzeichnet, daß** zur Auswertung des Geschwindigkeitskollektives im Hinblick auf den Kraftstoffverbrauch aus dem Geschwindigkeitskollektiv die jeden einzelnen Geschwindigkeitsbereich einer Gangstufe charakterisierenden Antriebsdrehzahlbereiche und deren Häufigkeitsverteilung unter Berücksichtigung der Lastgeberstufen ermittelt werden und die sich daraus ergebenden Zeitanteile mit dem jeweils spezifischen Verbrauch der einzelnen Drehzahl-/Drehmomentbereiche multipliziert werden.

10. Verfahren nach einem der Ansprüche 1 bis 9, **dadurch** gekennzeichent, daß die Betriebsdaten von der Steuervorrichtung der Getriebebaueinheit oder einer dieser übergeordneten Steuervorrichung erfaßt werden.

11. Verfahren nach einem der Ansprüche 1 bis 10, **dadurch gekennzeichnet, daß** die Betriebsdaten in der Steuervorrichtung der Getriebebaueinheit verarbeitet und ausgewertet werden.

12. Verfahren nach Anspruch 11, **dadurch gekennzeichnet, daß** eine Empfehlung während des Fahrbetriebes gegeben wird.

13. Verfahren nach einem der Ansprüche 1 bis 10, **dadurch gekennzeichnet, daß** die bei einem Schaltprogramm für einen Referenzeitraum und einen bestimmten Anwendungsfall sich ergebenden Betriebsdaten in der Steuervorrichtung der Getriebebaueinheit oder einer anderen Steuervorrichtung im Fahrzeug gespeichert werden und zu einem späteren Zeitpunkt extern auslesbar sind, wobei eine Auswertung extern vorgenommen wird.

14. Verfahren nach Anspruch 12 oder 13, **dadurch gekennzeichent, daß** aufgrund einer Empfehlung zur Änderung wenigstens eine Simulation mit den Betriebsdaten für eine andere theoretisch wählbare Achsübersetzung erfolgt und die Ergebnisse der Simulation mit den tatsächlich erfaßten daten verglichen werden und die Lösung mit dem optimalsten Ergebnis vorgeschlagen wird.

15. Verfahren nach einem der Ansprüche 1 bis 14, **dadurch gekennzeichnet, daß** die Referenzzeit oder Referenzstrecke frei wählbar sind.

16. Verfahren nach einem der Ansprüche 1 bis 14, **dadurch gekennzeichnet, daß** die Referenzzeit oder Referenzstrecke fest voregeben sind.

## Claims

1. A method for improving the design of the drive train for vehicles, comprising an engine (2), a transmission module (4) which can be coupled with the same for realizing at least two different gear ratios, and an axle transmission (5) arranged between the transmission module and the wheels to be driven, with the triggering of the shifting elements of the transmission module for changing between two gear ratios occurring by using a switching method for realizing a defined switching characteristic or a family of switching characteristics, especially for a predominantly used operating cycle, **characterized in that** for the gear-shifting processes according to a certain gear-shifting method;
1.1 the time share of the use of each gear ratio is determined over a reference period or a reference path for a gear-shifting method;
1.2 the load transmitter stages are determined in time shares;
1.3 the time shares in the gear ratios are associated with speed ranges and from the association a speed collective is formed for each gear ratio depending on the frequency of the speed ranges;
1.4 the speed collective is evaluated with respect to the occurred fuel consumption by considering the load transmitter stages, and
1.5 a recommendation for changing the transmission of the axle transmission unit is given in the case of a fuel consumption which is unfavorable for the operating cycle and/or adverse driving dynamics.

2. A method according to claim 1, **characterized in that** for determining the time shares of the utilization of the individual gear ratios, at least one variable which characterizes the engaged gear ratio at least indirectly and a variable describing at least indirectly the duration of the engagement of a gear ratio are detected.

3. A method according to one of the claims 1 or 2, **characterized in that** the assignment of the time shares in the gear ratios to the speed ranges can be **characterized by** the following method steps:
3.1 determination of the speed thresholds for each gear ratio on the basis of the actually used gear-shifting method;
3.2 determination of the gear-shifting speeds of the engine on the basis of a collective of load transmitters.

4. A method according to claim 3, **characterized in that** in the presence of a gear-shifting method with variable gear-shifting speeds a mean value each is formed for the gear-shifting speeds for changing between two gear ratios.

5. A method according to claim 4, **characterized in that** the change between the gear ratios occurs depending on the acceleration and time shares are determined for the load transmitter stages and a mean value for the load transmitter stages and axle drive ratio.

6. A method according to one of the claims 1 to 5, **characterized in that** for preparing the speed collective, the time shares in the upper gear ratios are subdivided into speed classes of a certain class width.

7. A method according to claim 6, **characterized in that** for preparing the speed collective, the time shares are determined in the upper gear ratios in speed classes from the collective of braking data.

8. A method according to claim 6, **characterized in that** the splitting of the remaining time shares in the respective gears is carried out on the basis of a speed distribution arising from the mean speed.

9. A method according to claim 1 to 8, **characterized in that** for evaluating the speed collective in view of the fuel consumption from the speed collective, the drive speed ranges characterizing each speed range of a gear ratio and their frequency distribution are determined by taking into account the load transmitter stages, and the time shares arising therefrom are multiplied with the respective specific consumption of the individual speed/torque ranges.

10. A method according to one of the claims 1 to 9, **characterized in that** the operating data are detected by the control apparatus of the transmission module or a high-ranking control apparatus.

11. A method according to one of the claims 1 to 10, **characterized in that** the operating data are processed or evaluated in the control apparatus of the transmission module.

12. A method according to claim 11, **characterized in that** a recommendation is given during the driving operation.

13. A method according to one of the claims 1 to 10, **characterized in that** the operating data obtained during a gear-shifting program for a reference period and a certain application are stored in the control apparatus of the transmission module or an other control apparatus in the vehicle and are externally readable at a later time, with an evaluation being performed externally.

14. A method according to claim 12 or 13, **characterized in that** as a result of a recommendation for change, at least one simulation occurs with the operating data for another theoretically chooseable axle drive ratio and the results of the simulation are compared with the actually acquired data and the solution with the optimal result is proposed.

15. A method according to one of the claims 1 to 14, **characterized in that** the reference time or reference path can be chosen freely.

16. A method according to one of the claims 1 to 14, **characterized in that** the reference time or reference path is predetermined in a fixed way.

## Revendications

1. Procédé pour améliorer la conception d'une chaîne de transmission pour un véhicule, comprenant un moteur d'entraînement (2), une unité de boîte de vitesses (4) pouvant être couplée à celui-ci pour réaliser au moins deux rapports différents et un engrenage d'essieu (5) disposé entre l'unité de boîte de vitesses et les roues à entraîner, dans lequel l'actionnement des éléments de changement de rapport de l'unité de boîte de vitesses pour le passage d'un rapport à un autre est réalisé en utilisant un procédé de changement de rapports pour réaliser une courbe caractéristique de changement de rapports ou un champ caractéristique de changement de rapports définis, en particulier pour un cycle de fonctionnement utilisé en majorité, **caractérisé en ce que** pour les opérations de changement de rapports selon un procédé de changement de rapports donné,
1.1 la part de temps d'utilisation de chaque rapport sur une durée de référence ou une distance de référence est déterminée pour un procédé de changement de rapports ;
1.2 les niveaux du capteur de position du papillon sont déterminé dans les parts de temps ;
1.3 les parts de temps sont associées pour chaque rapport à des plages de vitesse et un collectif de vitesses est créé pour chaque rapport à partir de cette association, en fonction de la fréquence des plages de vitesse ;
1.4 le collectif de vitesses est évalué en termes de consommation de carburant, compte tenu des niveaux du capteur de position du papillon ;
1.5 en cas de consommation de carburant défavorable pour le cycle de fonctionnement et de mauvaise dynamique de traction, une recommandation est émise pour effectuer une multiplication de l'unité d'engrenage d'essieu (5).

2. Procédé selon la revendication 1, **caractérisé en ce que** pour déterminer les parts de temps d'utilisation de chaque rapport, au moins une grandeur caractérisant au moins indirectement le rapport enclenché et une grandeur décrivant au moins indirectement la durée d'enclenchement d'un rapport sont déterminées.

3. Procédé selon l'une quelconque des revendications 1 ou 2, **caractérisé en ce que** l'association des parts de temps dans les rapports à des plages de vitesses peut être **caractérisée par** les étapes de procédé suivantes :
3.1 détermination des limites de vitesse pour chaque rapport à l'aide du comportement réel de changement de rapports ;
3.2 détermination des régimes du moteur d'entraînement au moment des changements de rapports à l'aide d'un collectif du capteur de position du papillon.

4. Procédé selon la revendication 3, **caractérisé en ce qu'**en cas de comportement de changement de rapports avec régime au moment des changements de rapports variable, une moyenne des régimes au moment des changement de rapports est constituée pour le passage d'un rapport à un autre.

5. Procédé selon la revendication 4, **caractérisé en ce que** le changement de rapports est effectué en fonction de l'accélération et les parts de temps pour les niveaux du capteur de position du papillon, une moyenne pour les niveaux du capteur de position du papillon et la multiplication de l'essieu sont déterminées.

6. Procédé selon l'une quelconque des revendications 1 à 5, **caractérisé en ce que** pour créer le collectif de vitesses, les parts de temps dans les rapports supérieurs sont réparties en classes de vitesse d'une largeur déterminée.

7. Procédé selon la revendication 6, **caractérisé en ce que** pour créer le collectif de vitesses, les parts de temps dans les rapports supérieurs sont déterminées dans des classes de vitesses provenant du collectif de données de freinage.

8. Procédé selon la revendication 6, **caractérisé en ce que** la division des parts de temps restantes dans les différents rapports est effectuée sur la base d'une répartition des vitesses résultant de la vitesse moyenne.

9. Procédé selon les revendications 1 à 8, **caractérisé en ce que** pour interpréter le collectif de vitesses en termes de consommation de carburant, des plages de régime d'entraînement caractérisant chaque plage de vitesses d'un rapport et leur répartition en fréquence sont déterminées à partir du collectif de vitesses compte tenu des niveaux du capteur de position du papillon et les parts de temps en résultant sont multipliées par la consommation spécifique pour chaque plage de régime ou de couple.

10. Procédé selon l'une quelconque des revendications 1 à 9, **caractérisé en ce que** les données d'exploitation sont recueillies par la commande de l'unité de boîte de vitesses ou par une unité de commande supérieure.

11. Procédé selon l'une quelconque des revendications 1 à 10, **caractérisé en ce que** les données d'exploitation sont traitées et interprétées dans la commande de la boîte de vitesses.

12. Procédé selon la revendication 11, **caractérisé en ce qu'**une recommandation est émise pendant que le véhicule roule.

13. Procédé selon l'une quelconque des revendications 1 à 10, **caractérisé en ce que** les données de fonctionnement obtenues dans un programme de changement de rapports pour une durée de référence et dans un cas d'utilisation donné sont mémorisées dans la commande de l'unité de boîte de vitesses ou dans un autre dispositif de commande du véhicule et peuvent être lues ultérieurement de l'extérieur, leur interprétation étant réalisée à l'extérieur.

14. Procédé selon la revendication 12 ou 13, **caractérisé en ce que** sur la base d'une recommandation de changement, au moins une simulation est effectuée avec les données de fonctionnement pour une autre multiplication d'essieu pouvant être théoriquement sélectionnée et les résultats de la simulation sont comparés avec les données effectivement recueillies, et la solution donnant le résultat optimal est proposée.

15. Procédé selon l'une quelconque des revendications 1 à 14, **caractérisée en ce que** la durée de référence ou la distance de référence peuvent être choisies librement.

16. Procédé selon l'une quelconque des revendications 1 à 14, **caractérisée en ce que** la durée de référence ou la distance de référence sont fixes.
